# EUROPÄISCHE PATENTANMELDUNG

(11) **EP 3 409 997 A1**
(43) Veröffentlichungstag der Anmeldung: **05.12.2018**
(21) Anmeldenummer: 18174835.1
(22) Anmeldetag: 29.05.2018
(51) Int. Cl.: F16M 11/10, F16M 11/18, F16M 11/20, F16M 11/42

(54) **VORRICHTUNG ZUR STABILISIERUNG EINES MOBILEN GERÄTS**

(30) Priorität: 01.06.2017 DE 102017112111
(71) Anmelder: Sung, Woo-Jun, 13353 Berlin (DE)
(72) Erfinder: Sung, Woo-Jun, 13353 Berlin (DE)
(74) Vertreter: Müller, Wolfram Hubertus

(57) **Zusammenfassung**

Die Erfindung betrifft eine Vorrichtung zur Stabilisierung eines mobilen Gerätes (M). Die Vorrichtung umfasst einen Pitchrahmen (20) zum Aufnehmen des mobilen Gerätes (M), einen Rollrahmen (30) sowie einen Yawrahmen (40). Der Pitchrahmen (20) ist mittels eines Pitchlagers (21) um eine Pitchachse (2) drehbar am Rollrahmen (30) gelagert, der Rollrahmen (30) ist mittels eines Rolllagers (31) um eine Rollachse (3) drehbar am Yawrahmen (40) gelagert und der Yawrahmen (40) ist mittels eines Yawlagers (41) um eine Yawachse (4) drehbar an einer Halterung (7) gelagert, so dass ein in den Pitchrahmen (20) aufgenommenes mobiles Gerät (M) um die Pitchachse (2), die Rollachse (3) und die Yawachse (4) drehbar ist. In einer Ausgangsposition (A), in der die Pitchachse (2) rechtwinklig zur Yawachse (4) angeordnet ist, ist das Rolllager (31) zur Lagerung des Rollrahmens (30) entlang der Yawachse (4) zwischen dem Yawlager (41) zur Lagerung des Yawrahmens (40) und dem Pitchlager (21) zur Lagerung des Pitchrahmens (20) angeordnet.

Darüber hinaus betrifft die Erfindung auch ein System (S) zur Stabilisierung eines mobilen Gerätes (M) und ein Verfahren.

## Beschreibung

Die Erfindung betrifft eine Vorrichtung zur Stabilisierung eines mobilen Gerätes nach dem Oberbegriff des Anspruchs 1, ein System zur Stabilisierung eines mobilen Gerätes nach dem Oberbegriff des Anspruchs 13 sowie ein Verfahren zum Justieren eines mobilen Gerätes nach dem Oberbegriff des Anspruchs 15.

Nach dem Oberbegriff des Anspruchs 1 umfasst eine derartige Vorrichtung einen Pitchrahmen zum Aufnehmen des mobilen Gerätes, beispielsweise einer Kamera, einen Rollrahmen sowie einen Yawrahmen. Dabei ist der Pitchrahmen um eine Pitchachse drehbar am Rollrahmen gelagert. Der Rollrahmen ist um eine Rollachse drehbar im Yawrahmen gelagert. Der Yawrahmen ist um eine Yawachse drehbar an einer Halterung gelagert. Die Vorrichtung ist derart konstruiert, dass ein in den Pitchrahmen aufgenommenes mobiles Gerät um die Pitchachse, die Rollachse und die Yawachse drehbar ist.

Eine solche Vorrichtung folgt dem Prinzip der kardanischen Lagerung. Durch die kardanische Lagerung können Schwankungen oder Erschütterungen, denen eine solche Vorrichtung ausgesetzt ist, mechanisch ausgeglichen werden. Dadurch bleibt ein in die Vorrichtung aufgenommenes mobiles Endgerät von den Schwankungen und Erschütterungen verschont.

Die Begriffe Yawachse, Rollachse und Pitchachse werden in dieser Offenbarung wie in der Fachliteratur gebräuchlich verwendet. So ist der Begriff Yawachse synonym zum Begriff Gierachse. Bei der Yawachse handelt es sich um eine im Allgemeinen vertikal ausgerichtete Rotationsachse. Der Begriff Rollachse ist synonym zum Begriff Wankachse. Hierbei handelt es sich um eine im Allgemeinen horizontal in Längsrichtung ausgerichtete Rotationsachse. Der Begriff Pitchachse wird synonym zum Begriff Nickachse verwendet. Hierbei handelt es sich um eine im Allgemeinen horizontal in Querrichtung ausgerichtete Rotationsachse. Die Yawachse ist rechtwinklig zur Rollachse angeordnet. Die Rollachse ist rechtwinklig zur Pitchachse angeordnet. Durch eine Drehung des Yawrahmens, an dem der Rollrahmen drehbar um die Rollachse gelagert ist, um die Yawachse, bleibt die rechtwinklige Anordnung der Yawachse zur Rollachse erhalten. Ebenso bleibt durch eine Drehung des Rollrahmens, an dem der Pitchrahmen drehbar um die Pitchachse gelagert ist, um die Rollachse, die rechtwinklige Anordnung der Rollachse zur Pitchachse erhalten. In einer Ausgangsposition ist auch die Pitchachse rechtwinklig zur Yawachse angeordnet. Durch eine Drehung des Rollrahmens, an dem der Pitchrahmen drehbar um die Pitchachse gelagert ist, rotiert auch die Pitchachse um die Rollachse. Durch diese Bewegung wird der Winkel zwischen Yawachse und Pitchachse verändert.

Gattungsgemäße Vorrichtungen sind beispielsweise aus dem Stand der Technik bekannte klassische dreiachsige Gimbal-Kamera-Stabilisierungssysteme, welche ebenfalls nach dem Prinzip der kardanischen Lagerung arbeiten. Ein solches System wird beispielsweise in der Figur 1 der WO2015/196488A1 gezeigt. Ein derartiges Stabilisierungssystem weist eine um 90 Grad gedrehte U-Form auf. Es wird von einer Person gehalten und geführt.

Es sind Gimbal-Stabilisierungssysteme bekannt, die eine mechanische Stabilisierung über die kardanische Lagerung mit einer elektronischen Stabilisierung kombinieren. Die elektronische Stabilisierung erfolgt, indem eine Sensorik Bewegungen des mobilen Gerätes detektiert und die detektierten Bewegungsdaten einer elektronischen Steuerungseinheit bereitstellt. Die elektronische Steuerungseinheit wertet die Sensordaten aus und steuert Motoren an, welche dazu ausgelegt sind die Rahmen zu bewegen, um so der detektierten Bewegung entgegenzuwirken.

Eine Steadicam, auch als Schwebestativ bekannt, bezeichnet eine andere aus dem Stand der Technik bekannte Vorrichtung zur Stabilisierung einer Kamera. Eine solche Vorrichtung ist beispielsweise aus der DE 25 41 264 bekannt. Als Steadicam wird ein Halterungssystem für tragbare Kameras bezeichnet, welches die Kamera stabilisiert und dadurch verwacklungsarme Bilder ermöglicht. Die Steadicam wird von einer Person gehalten und geführt. Eine Steadicam stellt einen senkrecht angeordneten, zweiseitigen Hebel dar. An der einen Seite, dem Lastarm, ist eine Kamera befestigt, an der anderen Seite, dem Kraftarm, ein Ausgleichsgewicht. In der Mitte der Verbindung von Last- und Kraftarm, dem Drehzentrum des zweiseitigen Hebels, befindet sich der Handgriff, an dem die Vorrichtung geführt wird. Das Ausgleichsgewicht wird so dimensioniert, dass der gemeinsame Schwerpunkt von Kamera, Steadicam und Ausgleichsgewicht im Handgriff der Steadicam oder knapp darunter liegt. Die Vorrichtung zeichnet sich durch ein großes Trägheitsmoment aus, welches für die Stabilisierung sorgt. Der Handgriff kann als kardanisches Gelenk ausgebildet sein, so dass die Kamera in alle Richtungen gedreht werden kann. Zusätzlich weist die Steadicam einen beweglichen Stützarm auf, der mit einem um den Rumpf der Person gelegten Traggeschirr verbunden ist und das schwere Ausgleichsgewicht aufnehmen kann.

Sowohl das Gimbal-Stabilisierungssystem als auch die Steadicam weisen den Nachteil auf, dass sie nicht dazu ausgelegt sind, Kameras beziehungsweise mobile Geräte großer Masse und Größe zu stabilisieren. Diese Vorrichtungen mit der daran lösbar befestigten Kamera wären zu schwer, um von einer Person gehalten und geführt zu werden. Darüber hinaus weisen die klassischen Gimbal-Stabilisierungssysteme den Nachteil auf, mobile Geräte großer Masse, insbesondere mit einer Masse von mehr als 15 kg, nur unzureichend stabilisieren zu können. Da der Schwerpunkt des mobilen Gerätes in einem klassischen Gimbal-System in der klassischen U-Konstruktionsform weit von der Yawachse entfernt liegt, werden insbesondere die Lager des Rollrahmens und des Yawrahmens stark belastet. Durch die starke Belastung ist eine hohe Leistung der Motoren zur elektronischen Stabilisierung des Yawrahmens und des Rollrahmens erforderlich, um den von außen einwirkenden Kräften durch geeignete Drehung der Rahmen entgegenzuwirken und das mobile Gerät zu stabilisieren. Die Stabilisierung durch diese Systeme ist damit mit einem erhöhten Energieeinsatz verbunden. Bei schweren mobilen Geräten über 15 kg ist die Motorleistung der eingesetzten Motoren nicht mehr stark genug, um eine befriedigende Stabilisierung sicherzustellen. Des Weiteren ergeben sich aus der U-Form Nachteile für die Robustheit der Systeme. Sowohl der Yawrahmen als auch der Rollrahmen sind einseitig in ihrem jeweiligen Lager aufgehängt. Durch die langen Hebelarme im Yawrahmen bzw im Rollrahmen, auf welche die Masse des mobilen Gerätes einwirkt, sind die Lager starken Kräften ausgesetzt. Dadurch sind die Systeme weniger robust und es kommt schneller zu Abnutzungserscheinungen.

Der vorliegenden Offenbarung liegt die Aufgabe zugrunde, die zuvor beschriebenen Nachteile zu überwinden. Insbesondere soll die im Folgenden offenbarte Vorrichtung die Stabilisierung von mobilen Geräten großer Masse ermöglichen. Die hier offenbarte Vorrichtung soll auch an einem Transportmittel, wie einem Wagen oder einem Kran, befestigt werden können, mit dem das in die Vorrichtung aufgenommene mobile Gerät bewegt werden kann. Die Aufgabe der Vorrichtung liegt in der Stabilisierung des aufgenommenen mobilen Gerätes, indem die von dem Transportmittel übertragenen unvorhersehbaren Bewegungen aufgefangen und nicht an das aufgenommene mobile Gerät weitergegeben werden.

Diese Aufgabe wird durch die Vorrichtung mit den Merkmalen des Anspruchs 1, durch das System mit den Merkmalen des Anspruchs 13 sowie durch das Verfahren mit den Merkmalen des Anspruchs 15 gelöst. Ausgestaltungen der Erfindung sind in den abhängigen Ansprüchen angegeben.

Danach ist die Vorrichtung derart ausgelegt, dass in einer Ausgangsposition, in der die Pitchachse rechtwinklig zur Yawachse angeordnet ist, das Rolllager zur Lagerung des Rollrahmens entlang der Yawachse zwischen dem Yawlager zur Lagerung des Yawrahmens und dem Pitchlager zur Lagerung des Pitchrahmens angeordnet ist.

Da die Ausrichtung der Pitchachse relativ zur Yawachse durch die Drehung des Rollrahmens verändert werden kann, legt die Ausgangsposition die Ausrichtung des Rollrahmens derart fest, dass Pitchachse und Yawachse rechtwinkelig zueinander angeordnet sind.

Die offenbarte Vorrichtung, als Weiterentwicklung eines klassischen Gimbal-Systems, ist in einer T-Form hinsichtlich der Lage der Lager zueinander statt in der klassischen U-Form angeordnet. In der T-Form sind die Lager, Yawlager, Rolllager und Pitchlager, zumindest in einer Ausgangsposition, übereinander angeordnet, wobei sich das Rollager zwischen dem Yawlager und dem Pitchlager befindet. Durch diese Anordnung entlang der Yawachse wird ein im Pitchrahmen aufgenommenes mobiles Gerät stabilisiert. In der Ausgangsposition ist die Vorrichtung im Wesentlichen entlang der Yawachse angeordnet. Durch diese Anordnung werden die aus dem Gewicht des mobilen Gerätes resultierenden, vom Rollrahmen und vom Yawrahmen an ihre jeweiligen Lager übertragenen Hebelkräfte reduziert. Die auf das Yawlager und das Rollager wirkenden Kräfte werden klein gehalten.

Die an einer der drei Drehachsen, Yawachse, Rollachse oder Pitchachse, angeordneten Bauteile, werden gemäß der jeweiligen Drehachse bezeichnet, an der sie angeordnet sind. So bezeichnet beispielsweise ein Yawrahmen, den Rahmen der Vorrichtung, der um die Yawachse drehbar gelagert ist. Das Yawlager bezeichnet das Lager, in dem der Yawrahmen gelagert ist. Die Yawwelle bezeichnet die Welle, die um die Yawachse drehbar ist, und mit dem Yawrahmen verbunden ist, um das von einem an der Yawwelle angeordneten Yawmotor erzeugte Drehmoment an den Yawrahmen zu übertragen.

In der offenbarten Vorrichtung zur Stabilisierung eines mobilen Gerätes bezeichnet die Yawachse also eine im Allgemeinen vertikal angeordnete Rotationsachse. Die Halterung, an der der Yawrahmen gelagert ist, und der Yawrahmen bilden eine Art Rückgrat der Vorrichtung. Die Rollachse ist entlang der Yawachse von der Halterung beabstandet. In der Ausgangsposition ist die Pitchachse entlang der Yawachse von der Halterung beabstandet. In der Ausgangsposition liegt die Rollachse zwischen der Halterung und dem innerhalb des Pitchrahmens verlaufenden Pitchachsenabschnitt.

Die Achsen der Vorrichtung sind derart angeordnet, dass sowohl die Rollachse als auch die Pitchachse die Yawachse schneiden. Diese Anordnung unterstützt die Stabilität der Vorrichtung. Mögliche Erschütterungen, denen die Vorrichtung ausgesetzt ist, können besser abgefangen beziehungsweise ausgeglichen werden, so dass das in die Vorrichtung aufgenommene mobile Gerät davon verschont bleibt.

Der Yawrahmen kann entlang der Yawachse ausgerichtet sein. Dadurch ist der am Yawrahmen drehbar um die Rollachse gelagerte Rollrahmen nahe der Yawachse gelagert. Das Lager des Rollrahmens verbleibt auch bei Drehungen des Yawrahmens um die Yawachse nahe an der Yawachse. Über den Rollrahmen wirkt das Gewicht eines am Pitchrahmen lösbar befestigten mobilen Gerätes auf das Lager des Rollrahmens ein. Durch die Anordnung des Yawrahmens entlang der Yawachse wird die Vorrichtung stabilisiert. Im Gegensatz dazu ist bei einem klassischen Gimbal-System der um die Yawachse drehbare an der Halterung gelagerte Yawrahmen in radialer Richtung von der Yawachse wegweisend ausgerichtet. Dadurch entsteht ein Hebel, und die Masse des von dem Yawrahmen gehaltenen, in den Pitchrahmen aufgenommenen mobilen Gerätes, beispielsweise einer Kamera, überträgt eine Kraft, welche auf die Lagerung des Yawrahmens in der Halterung einwirkt und diese belastet. Dies wird bei der hier offenbarten Vorrichtung vermieden.

Es ist vorteilhaft, wenn die Halterung, an der der Yawrahmen gelagert ist, ebenfalls entlang der Yawachse ausgerichtet ist, um die vom Yawrahmen übertragenen Kräfte aufzunehmen. Über den Yawrahmen wird das Gewicht der Vorrichtung und eines darin aufgenommenen mobilen Gerätes an die Halterung abgegeben.

Weiterhin ist es vorteilhaft, wenn der Schwerpunkt des Yawrahmens auf der Yawachse liegt. Liegt der Schwerpunkt des Yawrahmens auf der Yawachse, dann bleibt er auch bei Drehungen des Yawrahmens um die Yawachse dort. Dadurch wird die Stabilität der Vorrichtung weiter verbessert.

Weiterhin ist es vorteilhaft, wenn der Yawrahmen spiegelsymmetrisch bezüglich zumindest zweier Symmetrieebenen ausgelegt ist. In einer möglichen Ausführungsform wird eine erste Symmetrieebene gebildet durch eine durch Yawachse und Rollachse verlaufende erste Ebene. Eine zweite Symmetrieebene wird gebildet durch eine durch die Yawachse verlaufende zweite Ebene, wobei die zweite Ebene senkrecht auf der ersten Ebene steht.

Der Yawrahmen kann quaderförmig aufgebaut sein.

In einer möglichen Ausführungsform ist die Ausdehnung des Yawrahmens in axialer Richtung bezüglich der Yawachse größer als in radialer Richtung bezüglich der Yawachse.

Der Yawrahmen kann im Inneren des Rollrahmens angeordnet sein.

Es ist vorteilhaft, wenn die Größe der Auflagefläche des Rollrahmens am Yawrahmen größer ist als das Quadrat des Abstandes der Auflagefläche von der Yawachse.

In einer möglichen Ausführungsform ist der Rollrahmen zweiseitig am Yawrahmen gelagert. Der Rollrahmen kann beispielsweise an zumindest zwei Drehlagern am Yawrahmen gelagert sein. Durch die zweiseitige Lagerung werde die auf die Lager wirkenden Gewichtskräfte besser verteilt als bei einer einseitigen Lagerung.

Der Rollrahmen ist beispielsweise an zwei symmetrisch zur Yawachse angeordneten Achsabschnitten der Rollachse am Yawrahmen gelagert. Durch die zweiseitige Lagerung entstehen zwei Hebel, wobei die auf den Rollrahmen wirkenden Gewichtskräfte eines in den Pitchrahmen aufgenommenen mobilen Gerätes auf die beiden Hebel verteilt werden. Dadurch werden die Rolllager entlastet. Die zweiseitige Lagerung unterstützt zusätzlich die Stabilität der Vorrichtung. Dagegen ist bei einem klassischen Gimbal-System der Rollrahmen drehbar um die Rollachse einseitig am Yawrahmen gelagert. Dadurch entsteht ein einseitiger Hebel, der auf den Rollrahmen einwirkende Kräfte, wie die Gewichtskraft einer in den Pitchrahmen des Gimbal-Systems aufgenommenen Kamera, auf das Rolllager zur Lagerung des Rollrahmens am Yawrahmen überträgt und das Rolllager belastet. Dies gilt insbesondere, wenn eine schwere Kamera in den Pitchrahmen aufgenommen ist.

Es ist auch vorteilhaft, wenn der Rollrahmen spiegelsymmetrisch bezüglich zweier Symmetrieebenen ausgelegt ist. In einer möglichen Ausführungsform wird eine erste Symmetrieebene gebildet durch eine durch Rollachse verlaufende erste Ebene, wobei die Pitchachse senkrecht auf der ersten Ebene steht. Eine zweite Symmetrieebene wird gebildet durch eine durch die Pitchachse verlaufende zweite Ebene, wobei die Rollachse senkrecht auf der zweiten Ebene steht.

Es ist überdies vorteilhaft, wenn auch der Pitchrahmen spiegelsymmetrisch ausgelegt ist. In einer möglichen Ausführungsform wird eine erste Symmetrieebene gebildet durch eine erste Ebene, wobei die Pitchachse senkrecht auf der ersten Ebene steht. Eine zweite Symmetrieebene wird gebildet durch eine durch die Pitchachse verlaufende zweite Ebene, wobei die zweite Ebene senkrecht auf der ersten Ebene steht.

Die Vorrichtung kann spiegelsymmetrisch bezüglich zweier Symmetrieebenen ausgelegt sein, wenn sie sich in einer festgelegten Ausgangsposition befindet. Die festgelegte Ausgangsposition ist beispielsweise die Ausgangsposition, in der der Pitchrahmen entlang der Yawachse ausgerichtet ist. In einer möglichen Ausführungsform bildet in dieser Ausrichtung die Yawachse die Schnittgerade der beiden Symmetrieebenen. Eine erste Symmetrieebene wird gebildet durch die durch die Yawachse und die Rollachse verlaufende Ebene. Eine zweite Symmetrieebene, welche senkrecht zur ersten Symmetrieebene ist, wird gebildet durch eine durch die Yawachse und die Pitchachse verlaufende Ebene. Durch die symmetrische Anordnung ergibt sich, dass das Pitchlager zwei symmetrische Pitchlagereinheiten zur Lagerung des Pitchrahmens am Rollrahmen umfasst. Ebenso ergibt sich, dass das Rollager zwei symmetrische Rolllagereinheiten zur Lagerung des Rollrahmens am Yawrahmen umfasst.

Es ist vorteilhaft, wenn der Pitchrahmen derart ausgelegt ist, dass der Schwerpunkt des Pitchrahmens in einem ersten Punkt auf der Pitchachse liegt. Dann bleibt der Schwerpunkt auch bei Drehungen des Pitchrahmens in diesem ersten Punkt auf der Pitchachse.

Das mobile Gerät kann in den Pitchrahmen aufgenommen sein. Dabei ist es vorteilhaft, wenn der Pitchrahmen derart ausgelegt ist und das mobile Gerät derart in den Pitchrahmen aufgenommen ist, dass der Schwerpunkt aus einer ersten Struktur, umfassend den Pitchrahmen und das mobile Gerät, in einem ersten Punkt auf der Pitchachse liegt. Dann bleibt der Schwerpunkt der ersten Struktur auch bei Drehungen des Pitchrahmens mit dem aufgenommenen mobilen Gerät in diesem ersten Punkt auf der Pitchachse.

In einer Weiterentwicklung ist außerdem der Rollrahmen derart ausgelegt und der Pitchrahmen derart am Rollrahmen gelagert, dass der Schwerpunkt aus einer zweiten Struktur, umfassend den Rollrahmen, den Pitchrahmen und das mobile Gerät, in einem zweiten Punkt auf der Rollachse liegt. Dann bleibt der Schwerpunkt der zweiten Struktur auch bei Drehungen des Rollrahmens in diesem zweiten Punkt auf der Rollachse.

In den Pitchrahmen kann das mobile Gerät aufgenommen sein. Das mobile Gerät kann derart in den Pitchrahmen aufgenommen sein, dass der von der Vorrichtung und dem mobilen Gerät gemeinsam gebildete Schwerpunkt in der Ausgangsposition auf der Yawachse liegt und bei Drehungen entlang der Pitchachse und/oder der Rollachse und/oder der Yawachse auf der Yawachse bleibt. Falls die Vorrichtung beispielsweise in der festgelegten Ausgangsposition spiegelsymmetrisch bezüglich der ersten und der zweiten Symmetrieebene ausgelegt ist, dann liegt der Schwerpunkt der Vorrichtung sowie der Schwerpunkt des Pitchrahmens, des Rollrahmens und des Yawrahmens auf der Schnittgeraden der beiden Symmetrieebenen, also auf der Yawachse. Das mobile Gerät ist vorteilhaft derart in den Pitchrahmen aufgenommen, dass der Schwerpunkt des mobilen Gerätes im Schnittpunkt der Pitchachse mit der Yawachse liegt. Damit liegt der Schwerpunkt der Vorrichtung mit dem aufgenommenen mobilen Gerät auf der Yawachse. Bei einer Drehung des Yawrahmens um die Yawachse wird die Lage des Schwerpunktes nicht verändert. Ist die Vorrichtung so ausgelegt, dass der Schwerpunkt der ersten Struktur im Schnittpunkt der Pitchachse mit der Yawachse liegt, so bleibt der Schwerpunkt der ersten Struktur auch bei Drehung um die Pitchachse in diesem ersten Punkt. Ist die Vorrichtung weiterhin so ausgelegt, dass der Schwerpunkt der zweiten Struktur im Schnittpunkt der Rollachse mit der Yawachse liegt, so bleibt der Schwerpunkt der zweiten Struktur auch bei Drehung um die Rollachse in diesem zweiten Punkt.

Die Vorrichtung muss nicht vollständig, das heißt um 360 Grad, um die Pitchachse drehbar sein. Für die gewünschte Stabilisierung eines aufgenommenen mobilen Gerätes ist eine eingeschränkte Drehung bis zu einem maximalen Pitchwinkel ausreichend. Ein in den Pitchrahmen aufgenommenes mobiles Gerät ist um einen Pitchwinkel um die Pitchachse drehbar. Für ein großes mobiles Gerät, welches über die Montageplatte des Pitchrahmens hinausragt, an der es befestigt ist, kann das mobile Gerät bei Drehung des Pitchrahmens um die Pitchachse über einen maximalen Pitchwinkel hinaus gegen die Vorrichtung stoßen. Handelt es sich bei dem mobilen Gerät um eine Kamera kann ein Teil der Vorrichtung bei Drehung über den maximalen Pitchwinkel hinaus auch in den Blickwinkel der Kamera geraten, und damit die Aufnahme behindern. Der maximale Pitchwinkel, um den das mobile Gerät um die Pitchachse drehbar ist, beträgt bei einem großen mobilen Gerät zumindest 80 Grad. Aus einer festgelegten Ausgangsposition heraus lässt sich das mobile Gerät beispielsweise um jeweils zumindest 40 Grad in eine positive Drehrichtung und in eine negative Drehrichtung um die Pitchachse drehen. Für ein kleines mobiles Gerät, welches nicht über die Montageplatte des Pitchrahmens hinausragt, an der es befestigt ist, können die für große mobile Geräte aufgezeigten Probleme nicht auftreten. In diesem Fall wird der maximale Pitchwinkel durch die Anordnung und Größe des Pitchrahmens relativ zu den anderen Komponenten der Vorrichtung festgelegt. Hier beträgt der maximale Pitchwinkel zumindest 300 Grad. Aus einer festgelegten Ausgangsposition heraus lässt sich das mobile Gerät beispielsweise um jeweils zumindest 150 Grad in eine positive Drehrichtung und in eine negative Drehrichtung um die Pitchachse drehen.

Die Vorrichtung muss auch nicht vollständig, das heißt um 360 Grad, um die Rollachse drehbar sein. Für die gewünschte Stabilisierung eines aufgenommenen mobilen Gerätes ist eine eingeschränkte Drehung bis zu einem maximalen Rollwinkel ausreichend. Ein in den Pitchrahmen aufgenommenes mobiles Gerät ist um einen Rollwinkel um die Rollachse drehbar. Der maximale Rollwinkel, um den das mobile Gerät um die Rollachse drehbar ist, beträgt zumindest 60 Grad. Aus einer festgelegten Ausgangsposition heraus lässt sich das mobile Gerät beispielsweise um jeweils zumindest 30 Grad in eine positive Drehrichtung und in eine negative Drehrichtung um die Rollachse drehen.

Ein in den Pitchrahmen aufgenommenes mobiles Gerät ist um einen Yawwinkel um die Yawachse drehbar. Der maximale Yawwinkel, um den das mobile Gerät um die Yawachse drehbar ist, beträgt 360 Grad.

Eine Vorderseite des in den Pitchrahmen aufgenommenen mobilen Gerätes soll von der Vorrichtung nicht überdeckt werden, wenn das mobile Gerät um die Pitchachse, die Rollachse und/oder die Yawachse gedreht wird. Dadurch soll die Vorderseite des mobilen Gerätes für ein frontal vor der Vorrichtung angeordnetes Objekt vollständig sichtbar bleiben. Die Vorrichtung soll nicht den Blick auf die Vorderseite des mobilen Gerätes versperren. Umgekehrt versperrt die Vorrichtung dann auch nicht das Sichtfeld eines auf der Vorderseite des mobilen Gerätes angeordneten Objektivs auf seine Umgebung. Wenn es sich bei dem aufgenommenen mobilen Gerät um eine Kamera handelt, dann bedeutet das, dass der Blickwinkel der Kamera freigehalten wird. Die Kamera kann dann Bilder der Umgebung aufnehmen, ohne dass Teile der Vorrichtung im Weg stehen. Die Vorrichtung ist so ausgelegt, dass bei einer Drehung um die Pitchachse um den maximalen Pitchwinkel, bei einer Drehung um die Rollachse um den maximalen Rollwinkel und bei einer beliebigen Drehung um die Yawachse auch der Blickwinkel der Kamera freigehalten werden kann.

Der Pitchrahmen, der Rollrahmen und der Yawrahmen sind vorzugsweise aus leichtem Material gefertigt, beispielsweise aus Carbon oder Aluminium. Carbon weist zudem noch die vorteilhafte Eigenschaft auf, besonders stabil zu sein.

In einer möglichen Ausführung der Offenbarung weisen der Pitchrahmen und/oder der Rollrahmen justierbare Rundrohre auf, mit denen die Größe des Pitchrahmens und/oder des Rollrahmens angepasst werden kann. Die justierbaren Rundrohre können beispielsweise über justierbare Rohrschellen und Feststellschrauben fixiert werden. Die justierbaren Rundrohre bieten den Vorteil, dass die Größe von Pitchrahmen und Rollrahmen an die Größe des in den Pitchrahmen aufzunehmenden mobilen Gerätes angepasst werden können. Außerdem kann die Lage der Pitchachse innerhalb des Pitchrahmens justiert werden. Insbesondere kann die Lage der Pitchachse innerhalb des Pitchrahmens derart gewählt werden, dass die obigen Ausführungen zur Lage des Schwerpunktes der ersten Struktur erfüllt werden.

Die Vorrichtung kann ein Gewichtselement aus schwerem Material, wie zum Beispiel aus Kupfer oder aus Blei, aufweisen. Durch das Gewichtselement kann die Lage des Schwerpunktes der Vorrichtung verändert werden. Das Gewichtselement ist vorteilhaft derart ausgelegt, dass der Schwerpunkt des Gewichtselementes auf der Yawachse liegt.

Das Gewichtselement ist vorzugsweise am Rollrahmen angeordnet. Das Gewichtselement ist derart am Rollrahmen angeordnet, dass es ein Gegengewicht zu einem in den Pitchrahmen aufgenommenen mobilen Gerät bildet. In der Ausgangsposition ist das in den Pitchrahmen aufgenommene mobile Gerät auf einer ersten Seite der Rollachse und das Gewichtselement auf einer zweiten, der ersten gegenüberliegenden Seite der Rollachse angeordnet. In der Ausgangsposition liegt die Rollachse also zwischen dem Gewichtselement und dem in den Pitchrahmen aufgenommenen mobilen Gerät. Da die Rollachse horizontal angeordnet ist, liegen das Gewichtselement und das in den Pitchrahmen aufgenommene mobile Gerät übereinander. Durch das Gewichtselement wird der Schwerpunkt des Rollrahmens in der Ausgangsposition in Richtung der dem in den Pitchrahmen aufgenommenen mobilen Gerät gegenüberliegenden Seite verlagert. Dabei ist es unerheblich, ob sich das in den Pitchrahmen aufgenommene mobile Gerät in der Ausgangsposition oberhalb oder unterhalb der Rollachse befindet.

Das Gewichtselement ist vorgesehen, um die obigen Ausführungen zur Lage des Schwerpunktes der zweiten Struktur zu erfüllen. Das Gewichtselement ist vorzugsweise derart ausgebildet, dass es den gemeinsamen Schwerpunkt von einer zweiten Struktur umfassend den Rollrahmen, den Pitchrahmen und das in den Pitchrahmen aufgenommene mobile Gerät in die Rollachse verlagert.

Der Pitchrahmen weist vorzugsweise ein Befestigungselement auf, welches dazu ausgelegt ist das mobile Gerät in den Pitchrahmen aufzunehmen.

In einer Weiterentwicklung wird die Vorrichtung, neben den bisher offenbarten mechanischen Merkmalen, um elektronische Merkmale erweitert. Dazu ist eine elektronische Steuereinrichtung vorgesehen. Die Steuereinrichtung umfasst eine Sensorik, einen Controller und eine Mehrzahl von Motoren. Die Motoren umfassen zumindest einen Pitchmotor, zumindest einen Rollmotor und einen Yawmotor. Der zumindest eine Pitchmotor ist am Pitchlager angeordnet und zur Drehung des Pitchrahmens um die Pitchachse vorgesehen. Der zumindest eine Rollmotor ist am Rolllager angeordnet und zur Drehung des Rollrahmens um die Rollachse vorgesehen. Der Yawmotor ist am Yawlager angeordnet und zur Drehung des Yawrahmens um die Yawachse vorgesehen. Bevorzugt verfügt die Vorrichtung über zwei Pitchlager und an jedem Pitchlager ist ein eigener Pitchmotor vorgesehen. Ebenso verfügt die Vorrichtung bevorzugt über zwei Rolllager und an jedem Rolllager ist ein eigener Rollmotor vorgesehen. Zwei Pitchmotoren statt einem bieten den Vorteil, dass die beiden Pitchmotoren zusammenwirken und weniger leistungsfähig ausgelegt sein können, um die notwendige Kraft zur Drehung des Pitchrahmens um die Pitchachse aufzubringen. Zwei Rollmotoren statt einem bieten den Vorteil, dass die beiden Rollmotoren zusammenwirken und weniger leistungsfähig ausgelegt sein können, um die notwendige Kraft zur Drehung des Rollrahmens um die Rollachse aufzubringen. Ist der Rollrahmen beispielsweise an zwei symmetrisch zur Yawachse angeordneten Achsabschnitten der Rollachse am Yawrahmen gelagert und ist an jedem der symmetrisch angeordneten Rolllager ein Rollmotor angeordnet, dann werden durch die zweiseitige Lagerung die auf den Rollmotoren wirkenden Gewichtskräfte verteilt, wodurch die Rollmotoren entlastet werden. Die Sensorik detektiert Drehungen eines in den Pitchrahmen aufgenommenen mobilen Gerätes und übermittelt diese an den Controller. Der Controller steuert die Motoren an, um die von der Sensorik detektierten Bewegungen auszugleichen. Dazu werden die jeweiligen Rahmen geeignet gedreht. Dadurch wird das mobile Gerät besser stabilisiert und besser in einer festgelegten Ausrichtung gehalten als dies durch eine rein mechanische Stabilisierung möglich ist. In einer möglichen Umsetzung sind die jeweiligen Motoren dazu ausgelegt eine jeweilige Welle, die mit einem jeweiligen Rahmen verbunden ist, um eine jeweilige Achse zu drehen. So ist der zumindest eine Pitchmotor dazu ausgelegt eine mit dem Pitchrahmen verbundene Pitchwelle um die Pitchachse zu drehen. Der zumindest eine Rollmotor ist dazu ausgelegt eine mit dem Rollrahmen verbundene Rollwelle um die Rollachse zu drehen. Der Yawmotor ist dazu ausgelegt eine mit dem Yawrahmen verbundene Yawwelle um die Yawachse zu drehen.

Das Befestigungselement kann als eine Montageplatte mit einer oberen und einer unteren Seite ausgebildet sein. Das mobile Gerät ist auf der oberen Seite der Montageplatte anbringbar. Die Montageplatte ist mittels Stellschrauben in Rechts-/Links- und/oder Vorwärts-/Rückwärts-Richtung bezüglich ihrer Anordnung im Pitchrahmen verschiebbar. Dadurch ist eine Feinjustierung der Anordnung des mobilen Gerätes in Bezug auf den Pitchrahmen möglich. Die Feinjustierung ermöglicht es, die Lage des Schwerpunktes des mobilen Gerätes innerhalb des Pitchrahmens zu variieren. Auf diese Weise können die weiter oben formulierten Anforderungen zur Lage des Schwerpunktes des mobilen Gerätes erfüllt werden. Auf der unteren Seite der Montageplatte ist die Sensorik angeordnet.

Die Vorrichtung ist dazu ausgelegt, mobile Geräte mit einer Masse von maximal 30 kg aufzunehmen. Die Vorrichtung ist derart ausgelegt, dass sie auch mobile Geräte mit einer Masse zwischen 15 kg und 30 kg noch sicher stabilisieren kann.

Insbesondere ist die Vorrichtung dazu vorgesehen, als mobiles Gerät eine Kamera in den Pitchrahmen aufzunehmen.

Die Halterung kann dazu genutzt werden die Vorrichtung lösbar an einem Transportmittel zu befestigen. Das Transportmittel kann beispielsweise ein Fahrzeug, wie ein Transportwagen oder ein Kamerawagen, sein. Das Transportmittel kann auch ein Schienensystem, ein Fluggerät oder ein Kran sein. Durch die Bewegung des Transportmittels können Neigungen, Erschütterungen und Vibrationen auf die Vorrichtung übertragen werden. Die Vorrichtung ist dazu ausgelegt, die Ausrichtung eines aufgenommenen mobilen Gerätes stabil zu halten, so dass mögliche Neigungen, Erschütterungen und Vibrationen nicht auf das mobile Gerät übertragen werden. Insbesondere werden auch Vibrationen hoher Frequenz vom mobilen Gerät ferngehalten. Dabei kann die Vorrichtung derart an dem Transportmittel befestigt sein, dass die Halterung einen unteren Teil der sich vertikal entlang der Yawachse erstreckenden Vorrichtung bildet. In der Ausgangsposition bildet der Pitchrahmen dann einen oberen Teil der Vorrichtung. Die Vorrichtung kann aber auch in umgekehrter Richtung an dem Transportmittel befestigt sein. Dies ist beispielsweise der Fall, wenn die Halterung an einem Kran befestigt ist und die Vorrichtung von oben durch den Kran gehalten und bewegt wird. In diesem Fall bildet die Halterung einen oberen Teil der sich vertikal entlang der Yawachse erstreckenden Vorrichtung. In der Ausgangsposition bildet der Pitchrahmen dann einen unteren Teil der Vorrichtung.

Die Aufgabe wird auch durch ein System zur Stabilisierung eines mobilen Gerätes umfassend eine Vorrichtung zur Stabilisierung eines mobilen Gerätes mit den zuvor ausgeführten Merkmalen sowie ein Transportmittel zum Bewegen der Vorrichtung gelöst. Dazu ist die Halterung der Vorrichtung am Transportmittel befestigt.

Das System kann insbesondere derart ausgelegt sein, dass das Transportmittel Vorrichtung an der Halterung von oben hält, so dass die Vorrichtung herunterhängt. In diesem Fall bildet die Halterung einen oberen Bereich der Vorrichtung und der Pitchrahmen zum Aufnehmen des Mobilen Gerätes ist in der Ausgangsposition unterhalb der Halterung angeordnet.

Die Aufgabe wird weiterhin von einem Verfahren zum Justieren eines mobilen Gerätes in einer Vorrichtung zur Stabilisierung des mobilen Gerätes nach den obigen Ausführungen gelöst. Das Verfahren umfasst die drei folgenden Schritte. In einem ersten Schritt wird der Pitchrahmen an das aufzunehmende mobile Gerät angepasst und justiert. In einem zweiten Schritt wird das mobile Gerät in den Pitchrahmen aufgenommen und das mobile Gerät wird im Pitchrahmen justiert. In einem dritten Schritt wird der Rollrahmen angepasst und justiert. Vorzugsweise erfolgt die Anpassung des Pitchrahmens und Justierung innerhalb des Pitchrahmens im ersten und im zweiten Schritt in der Weise, dass der Schwerpunkt einer ersten Struktur, umfassend den Pitchrahmen und das mobile Gerät, in der Pitchachse liegt. Außerdem erfolgt die Anpassung und Justierung des Rollrahmens im dritten Schritt in der Weise, dass der Schwerpunkt einer zweiten Struktur, umfassend den Rollrahmen und die erste Struktur, in der Rollachse liegt. In einer noch bevorzugteren Ausführung des Verfahrens erfolgt die Justierung des mobilen Gerätes innerhalb des Pitchrahmens derart, dass der Schwerpunkt der ersten Struktur in dem Schnittpunkt der Pitch- mit der Yawachse liegt. Dazu ist der Pitchrahmen zunächst derart auszurichten, dass die Pitchachse rechtwinkelig zur Yawachse liegt. In einer ebenfalls bevorzugteren Ausführung des Verfahrens erfolgt die Justierung des Rollrahmens derart, dass der Schwerpunkt der zweiten Struktur im Schnittpunkt der Roll- mit der Yawachse liegt. Auch hierzu sollte die Pitchachse weiterhin rechtwinkelig zur Yawachse ausgerichtet sein.

Ausführungsformen zu den hier beanspruchten Gegenständen werden anhand nachfolgender Figuren beispielhaft dargestellt. Es zeigen:
- Fig. 1: eine perspektivische Darstellung einer kardanischen Lagerung eines Schiffskompass als einen ersten Stand der Technik;
- Fig. 2: eine perspektivische Darstellung eines klassischen dreiachsigen Gimbal-Stabilisierungssystems als einen zweiten Stand der Technik;
- Fig. 3: eine perspektivische Darstellung eines ersten Ausführungsbeispiels einer Vorrichtung zur Stabilisierung eines mobilen Gerätes in einer Ausgangsposition;
- Fig. 3A: eine perspektivische Darstellung eines zweiten Ausführungsbeispiels einer Vorrichtung zur Stabilisierung eines mobilen Gerätes in einer Ausgangsposition;
- Fig. 3B: eine seitliche Darstellung eines dritten Ausführungsbeispiels einer Vorrichtung zur Stabilisierung eines mobilen Gerätes mit mobilem Gerät;
- Fig. 4A: einen Stator als Teil eines Rollmotors;
- Fig. 4B: einen ersten Ausschnitt der Vorrichtung mit einem Rotor des Rollmotors;
- Fig. 4C: einen zweiten Ausschnitt der Vorrichtung mit einem Rotor des Rollmotors;
- Fig. 5: eine perspektivische Darstellung eines Ausführungsbeispiels eines Systems zur Stabilisierung eines mobilen Gerätes.

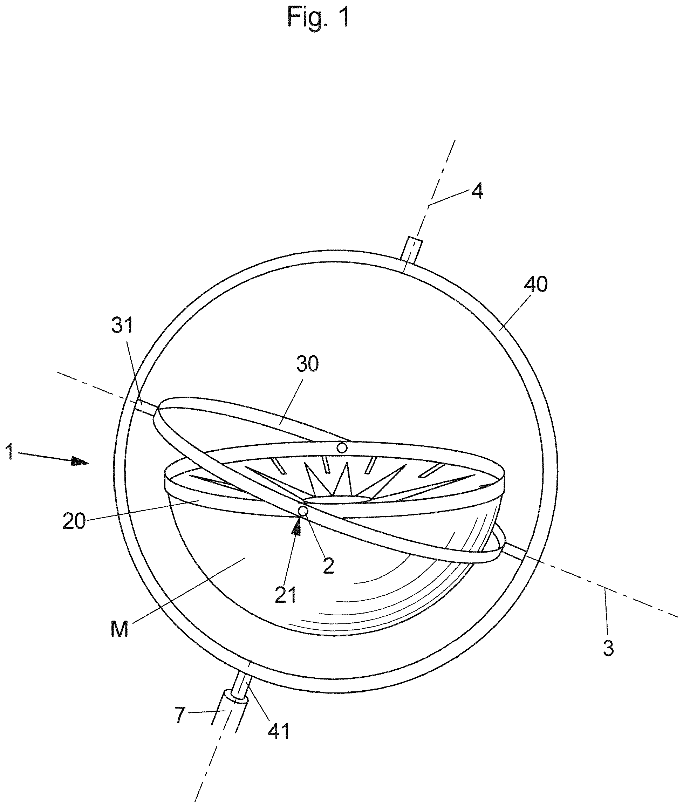

Fig. 1 zeigt eine kardanische Lagerung eines Schiffskompasses M als einen ersten Stand der Technik. Durch die kardanische Lagerung ist der Schiffskompass M allseitig drehbar im Raum gelagert. Die kardanische Lagerung oder Aufhängung verfügt über einen ringförmigen Yawrahmen 40, der drehbar um die Yawachse 4 gelagert ist. Im Yawrahmen 40 ist ein ringförmiger Rollrahmen 30 an einem Rolllager 31 gelagert, wobei der Rollrahmen 30 um eine Rollachse 3 drehbar ist und die Rollachse 3 senkrecht zur Yawachse 4 verläuft. Im Rollrahmen 30 ist ein ringförmiger Pitchrahmen 20 an einem Pitchlager 21 gelagert, wobei der Pitchrahmen 20 um eine Pitchachse 2 drehbar ist und die Pitchachse 2 senkrecht zur Rollachse 3 verläuft. In einem Ruhezustand sind die Rahmen 20, 30, 40 so ausgerichtet, dass je zwei Achsen 2, 3, 4 jeweils senkrecht zueinander sind, insbesondere also auch die Pitchachse 2 senkrecht zur Yawachse 4 verläuft. Der Yawrahmen 40 ist mittels eines Yawlagers 41 durch eine Halterung 7 mit einem Transportmittel T, z.B. einem Schiff, verbunden. Durch die beschriebene kardanische Lagerung bleibt ein im innersten Ring, dem Pitchrahmen 20, aufgehängtes mobiles Gerät M, z.B. ein Schiffskompass, unbeeinflusst von Lageänderungen des Gesamtsystems. Die Ausrichtung des Schiffskompasses bleibt also von den Bewegungen des Schiffs unbeeinflusst.

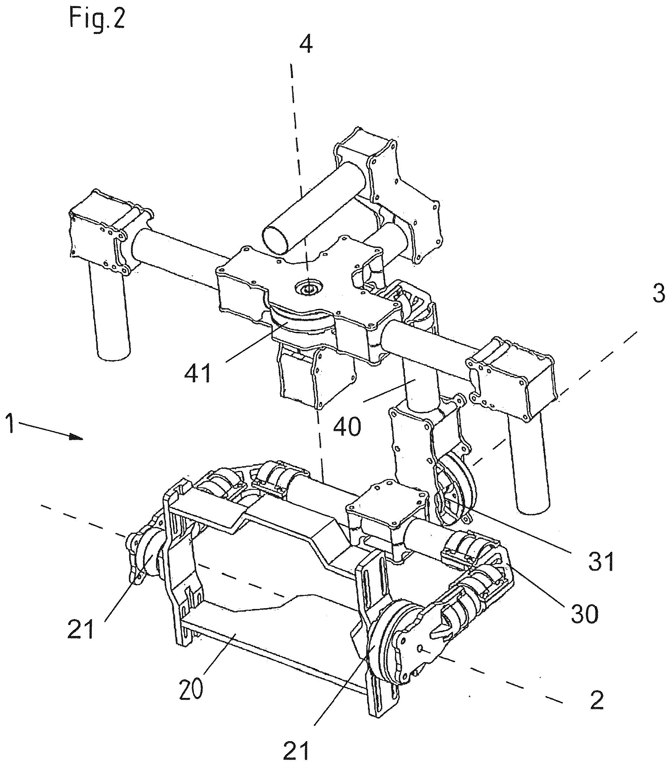

Fig. 2 zeigt ein klassisches dreiachsiges Gimbal-Stabilisierungssystem als einen zweiten Stand der Technik. Einem Gimbal-System liegt das Prinzip der kardanischen Aufhängung zu Grunde. Da das Gimbal-System eine Kamera stabilisieren soll und einen Blickwinkel für die Kamera offenhalten soll, können nicht mehr alle Kardanringe 20, 30, 40 geschlossen ausgebildet sein, wie bei dem Kardansystem zur Stabilisierung eines Schiffskompasses aus Fig. 1. Deshalb sind der Yawrahmen 40 und der Rollrahmen 30 offen und nicht mehr geschlossen ausgebildet. An dem Pitchlager 21, dem Rollager 31 und dem Yawlager 41 sind Motoren befestigt, die mit einer elektronischen Steuereinrichtung verbunden sind. Die Vorrichtung hat die Form eines um 90° gedrehten U, so dass die Schenkel der U-Form horizontal verlaufen und übereinander angeordnet sind und die Grundlinie der U-Form vertikal verläuft, und die beiden Schenkel verbindet. Dabei liegt das Rollager 31 entfernt von der durch das Yawlager 41 verlaufenden Yawachse 4 und entfernt vom Schwerpunkt des Gimbal-Systems. Das Rolllager 31 ist im Übergang von unterem Schenkel zur Grundlinie des U angeordnet. Der obere längere Schenkel umfasst das Yawlager 41. An den unteren Schenkel schließt eine zweite, liegende U-Form an. An jedem Schenkel der zweiten U-Form befindet sich ein Pitchlager 21. Zwischen den beiden Pitchlagern 21 ist der Pitchrahmen 20 angeordnet, an welchem das mobile Gerät M befestigt ist. Ein Nachteil dieser Bauweise ist, dass durch die langen Hebel starke Drehmomente wirken. Dies führt zu einer starken Belastung der Yaw- und Rolllager 41, 31, sowie der daran angeordneten Yaw- und Rollmotoren 43, 33. Die Motoren 43, 33 können nur mit hohem Energieaufwand bewegt werden. Außerdem ergeben sich Probleme in der Stabilisierung von schweren Kameras. Deshalb ist das klassische Gimbal-Stabilisierungssystem nur für kleine und leichte Kameramodelle verwendbar.

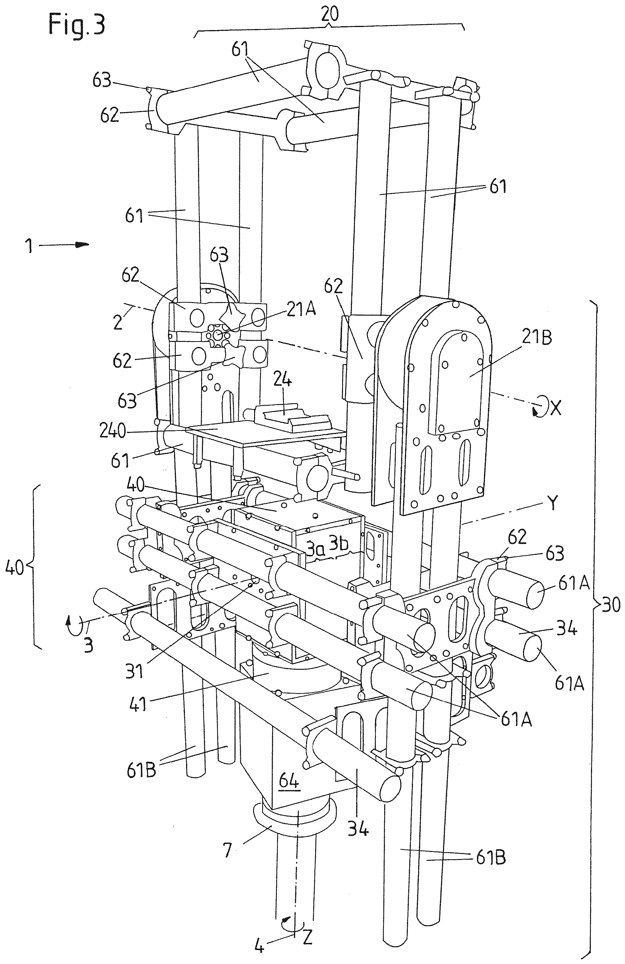

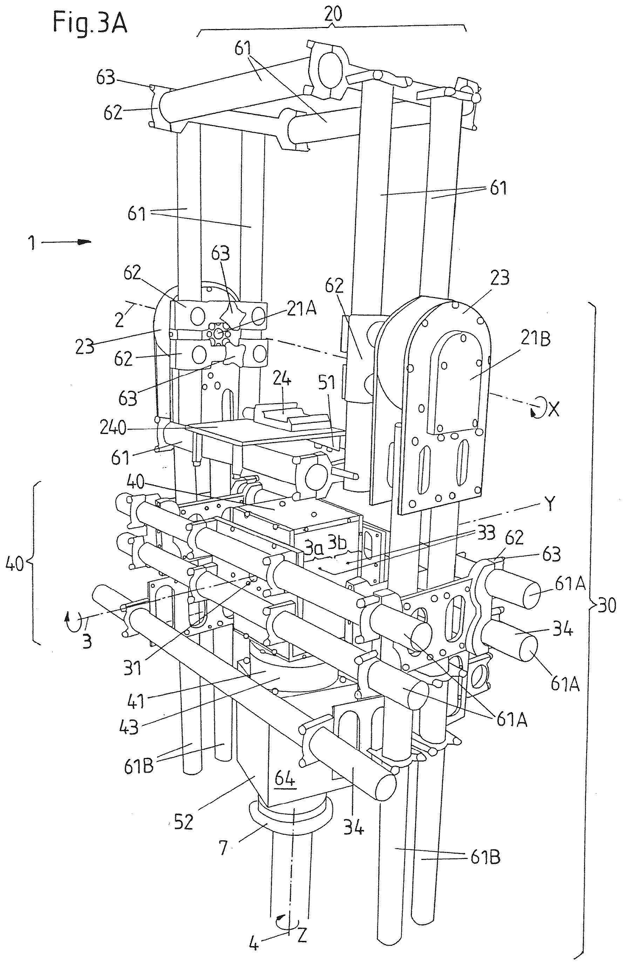

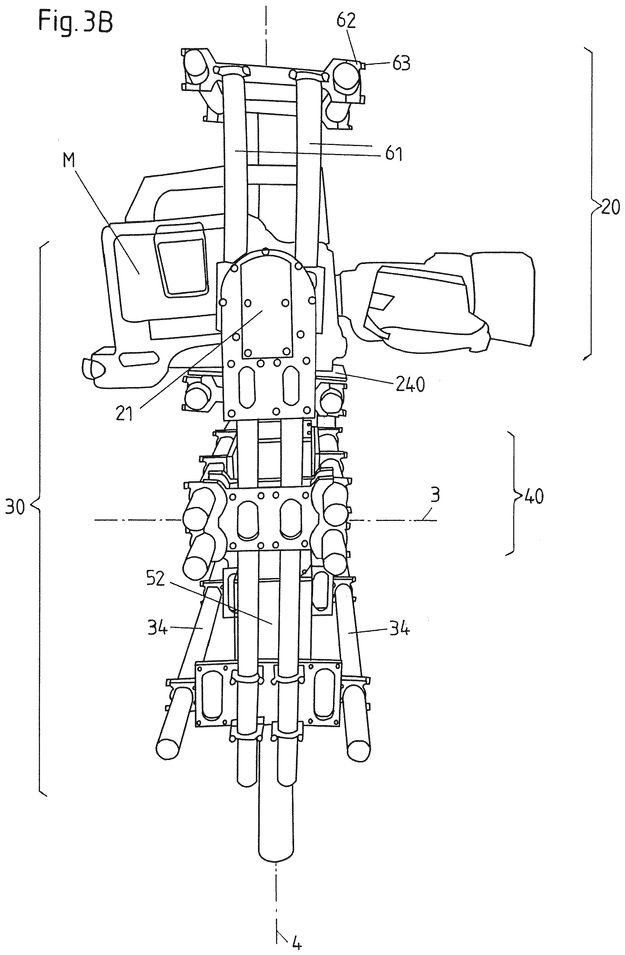

Fig 3 beschreibt ein erstes Ausführungsbeispiel der hier offenbarten Vorrichtung 1 zur Stabilisierung eines mobilen Gerätes M, welche ebenfalls nach dem Prinzip der kardanischen Aufhängung arbeitet. Die Vorrichtung 1 verfügt über einen Yawrahmen 40, der mittels eines Yawlagers 41 drehbar um eine Yawachse 4 an einer Halterung 7 gelagert ist.

Der Yawrahmen 40 ist in diesem Ausführungsbeispiel quaderförmig aufgebaut, kann aber auch andere Formen annehmen. Vorteilhaft ist, dass der Yawrahmen 40 entlang der Yawachse 4 ausgerichtet ist. Das heißt die Ausdehnung des Yawrahmens 40 ist in axialer Richtung bezüglich der Yawachse 4 größer als in radialer Richtung. Außerdem ist der Yawrahmen 40 symmetrisch aufgebaut. Insbesondere ist er spiegelsymmetrisch bezüglich einer ersten Symmetrieachse E1, die durch die Rollachse 3 und die Yawachse 4 (y-z-Ebene) definiert wird. Der Yawrahmen 40 ist auch spiegelsymmetrisch bezüglich einer rechtwinklig zur Rollachse 3 verlaufenden zweiten Symmetrieebene E2, welche in der dargestellten Ausgangsposition A der Vorrichtung 1 mit der durch die Pitchachse 2 und die Yawachse 4 (x-z-Ebene) gebildeten Ebene zusammenfällt. Durch die Symmetrieeigenschaften des Yawrahmens 40 liegt sein Schwerpunkt auf der Yawachse 4.

Am Yawrahmen 40 befinden sich zwei Rollager 31, an welchen ein Rollrahmen 30 drehbar um die Rollachse 3 gelagert ist. Der Yawrahmen 40 ist im Inneren des Rollrahmens 30 angeordnet. Die Rollachse 3 schneidet die Yawachse 4 und ist senkrecht zu dieser ausgerichtet. Auch bei Drehung des Yawrahmens 40 um die Yawachse 4 und bei Drehungen des Rollrahmens 30 um die Rollachse 3 bleiben Yawachse 4 und Rollachse 3 senkrecht zueinander ausgerichtet. Die beiden Rolllager 31 sind an zwei, symmetrisch zur Yawachse angeordneten Achsabschnitten 3a, 3b der Rollachse 3 am Yawrahmen 40 angeordnet. An oberen linken und rechten Abschnitten des Rollrahmens 30 sind zwei Pitchlagereinheiten 21A, 21B zur Lagerung eines Pitchrahmens 20 angeordnet, wobei der Pitchrahmen 20 um eine Pitchachse 2 drehbar ist.

Fig. 3 zeigt die Vorrichtung 1 in einer Ausgangsposition A, in welcher erste Rundrohre 61A des Rollrahmens 30, welche nahe der Rolllager 31 angeordnet sind, horizontal verlaufen. Mittels Rohrschellen 62 und Feststellschrauben 63 daran befestigte zweite Rundrohre 61B des Rollrahmens 30 verlaufen vertikal. In der dargestellten Ausgangsposition A ist auch die Pitchachse 2 horizontal ausgerichtet. In der Ausgangsposition A verläuft die Pitchachse 2 rechtwinkelig zur Yawachse 4. Wird der Rollrahmen 30 um die Rollachse 3 gedreht, so wird auch der Pitchrahmen 20 mitgedreht. Durch die Drehung verändert sich der Winkel, in dem sich Yawachse 4 und Pitchachse 2 schneiden.

Die Vorrichtung 1 zeichnet sich hinsichtlich der Lage der Lager 21A, 21B, 31, 41 zueinander durch eine T-Form aus. Die Besonderheit diese Bauform liegt darin, dass die beiden Rolllager 31 zur Lagerung des Rollrahmens 30 in der dargestellten Ausgangsposition A entlang der Yawachse 4 zwischen dem Yawlager 41 und dem Pitchlager 21, umfassend die beiden Pitchlagereinheiten 21A, 21B, angeordnet sind. Außerdem befinden sich beide Rolllager 31 nahe der Yawachse 4. Der Vorteil dieser Bauform liegt darin, dass die Hebel kurz sind und nur geringe Drehmomente auf die Roll- und Yawlager 31, 41 wirken. Die T-Konstruktionsform wirkt sich somit günstig auf die Achsbelastungen aus. Es können große und schwere Kameramodelle stabilisiert werden.

Darüber hinaus zeichnet sich die Vorrichtung 1 durch eine charakteristische H-Form des Rollrahmens 30 aus, die durch die horizontal und vertikal verlaufenden Rundrohre 61A, 61B des Rollrahmens 30 ausgebildet wird. Wird der Rollrahmen 30 um die Rollachse 3 gedreht, so bleibt die H-Form erhalten, ist aber nicht mehr in Horizontal-Vertikal-Richtung ausgerichtet. Die Ausdehnung des Rollrahmens 30, insbesondere entlang der Yawachse 4 (Höhe) und entlang der Pitchachse 2 (Breite), kann variiert werden. Dies kann durch Justieren der Rundrohre 61A, 61B erreicht werden. Dazu werden die Rohrschellen 62, mit denen die Rundrohre 61A, 61B fixiert sind, verschoben. Ebenso kann die Ausdehnung des Pitchrahmens 20, insbesondere entlang der Yawachse 4 (Höhe) und entlang der Pitchachse 2 (Breite), mittels Verschieben der Rohrschellen 62 zur Fixierung der Rundrohre 61 des Pitchrahmens 20, variiert werden. Auf diese Weise lässt sich die Größe des Pitchrahmens 20 und des Rollrahmens 30 an die Größe des aufzunehmenden mobilen Gerätes M anpassen. Darüber hinaus weist der Rollrahmen 30 justierbare Gewichtselemente 34 auf, mit denen der Schwerpunkt des Rollrahmens 30 verändert werden kann.

Fig. 3A stellt eine zweite Ausführungsform als Weiterentwicklung der in Fig. 3 dargestellten ersten Ausführungsform dar. Die bereits zu Fig. 3 beschriebene Vorrichtung 1 zur Stabilisierung eines mobilen Gerätes M wurde um eine elektronische Steuereinrichtung 5 erweitert, die die Stabilisierung weiter verbessert. Die elektronische Stabilisierung erfolgt, indem eine Sensorik 51 Bewegungen des mobilen Gerätes M detektiert und die detektierten Bewegungsdaten einer elektronischen Steuerungseinheit bzw. einem Controller 52 übermittelt. Der Controller 52 wertet die Sensordaten aus und steuert Pitch-, Roll- und Yawmotoren 23, 33, 43 an, welche dazu ausgelegt sind den Pitchrahmen 20 mittels einer Pitchwelle 22, den Rollrahmen 30 mittels einer Rollwelle 32 und den Yawrahmen 40 mittels einer Yawwelle 42 um ihre jeweilige Achse 2, 3, 4 zu drehen, um so der detektierten Bewegung entgegenzuwirken. Auf diese Weise kann das in die Vorrichtung 1 aufgenommene mobile Gerät M weiter stabilisiert und in einer festgelegten Ausrichtung gehalten werden. Die bereits zu Fig. 3 beschriebene T-Form der Vorrichtung 1 hat hinsichtlich der hier betrachteten Weiterentwicklung zusätzlich den Vorteil, dass nur geringe Kräfte auf die an den Roll- und Yawlagern 31, 41 angeordneten Roll- und Yawmotoren 33, 43 wirken. Die T-Konstruktionsform wirkt sich somit günstig auf die Motorbelastungen aus. Es können große und schwere Kameramodelle stabilisiert werden. Auch müssen die Roll- und Yawmotoren 33, 43 weniger Energie aufwenden, um die Rahmen 30, 40 zu bewegen.

Fig. 3B beschreibt eine schematische seitliche Darstellung eines dritten Ausführungsbeispiels einer Vorrichtung 1 zur Stabilisierung eines mobilen Gerätes M, in welcher eine Kamera als mobiles Gerät M in die Vorrichtung aufgenommen ist. Das dritte Ausführungsbeispiel stellt eine Variation der zu Fig. 3 und Fig. 3A bereits beschriebenen Ausführungsbeispiele dar. In der in Fig. 3B gezeigten Vorrichtung 1 wird das am Rollrahmen 30 angeordnete erste Gewichtselement 34, das in den Fig. 3A und Fig. 3B gezeigt wird, um ein zweites Gewichtselement 34 ergänzt, welches spiegelsymmetrisch zum ersten Gewichtselement 34 bezüglich der durch die Pitchachse 2 und Yawachse 4 gebildeten Ebene (x-z-Ebene) angeordnet ist. Das dritte Ausführungsbeispiel zeichnet sich dadurch aus, dass der Rollrahmen 3 spiegelsymmetrisch bezüglich zweier Symmetrieebenen E1, E2 aufgebaut ist. Genauer gesagt, ist der Rollrahmen 30 spiegelsymmetrisch bezüglich der durch die Rollachse 3 und die Yawachse 4 gebildeten ersten Symmetrieebene E1 (y-z-Ebene). Der Rollrahmen ist auch spiegelsymmetrisch bezüglich der durch die Pitchachse 2 und die Yawachse 4 gebildeten zweiten Symmetriebene E2 (x-z-Ebene). Durch die seitliche Darstellung liegt die Pitchachse 2 senkrecht zur Bildebene und ist deshalb nicht dargestellt.

In der dargestellten Ausgangsposition A ist die gesamte Vorrichtung spiegelsymmetrisch bezüglich der beiden Symmetrieebenen E1, E2. Die Spiegelsymmetrie bezüglich der beiden Symmetrieebenen E1, E2 bewirkt, dass sowohl der Schwerpunkt des Pitchrahmens 21 als auch der Schwerpunkt des Rollrahmens 31 als auch der Schwerpunkt der kompletten Vorrichtung 1 in der Schnittgeraden der beiden Symmetrieebenen E1, E2, also auf der Yawachse 4, liegen. Das mobile Gerät M ist vorzugsweise derart in den Pitchrahmen 21 aufgenommen, dass der Schwerpunkt einer ersten Struktur 25, gebildet durch den Pitchrahmen 21 und das mobile Gerät M, im Schnittpunkt der Pitchachse 2 mit der Yawachse 4 liegt. Dies kann beispielsweise durch Variation der Höhe der in der Ausgangsposition A horizontal ausgerichteten Rundrohre 61 des Pitchrahmens 21 sowie der Höhe der Feststellplatte 240, an der das mobile Gerät M angebracht ist, erreicht werden. Durch die Lage des Schwerpunktes der ersten Struktur 25 im Schnittpunkt von Pitchachse 2 und Yawachse 4 in der in Fig. 3B gezeigten Ausgangsposition A bleibt der Schwerpunkt der ersten Struktur 25 auch bei Drehungen um die Pitchachse 2 in diesem Schnittpunkt. Zusätzlich kann durch Variation der Masse und Lage der Gewichtselemente 34 am Rollrahmen 31 erreicht werden, dass eine zweite Struktur 35, gebildet durch die erste Struktur 25 und den Rollrahmen 31, ihren Schwerpunkt im Schnittpunkt der Rollachse 3 mit der Yawachse 4 hat. Durch die zuvor beschriebene Lage des Schwerpunktes der ersten Struktur 25 und des Schwerpunktes der zweiten Struktur 35 bleibt der Schwerpunkt der zweiten Struktur 35 auch bei beliebigen Drehungen der Vorrichtung 1 um die Pitchachse 2, die Rollachse 3 und/oder die Yawachse 4 in Schnittpunkt von Rollachse 3 und Yawachse 4.

Die Lage des Schwerpunktes der Vorrichtung 1 sowie der ersten und zweiten Struktur 25, 35 auf der Yawachse 4 oder nahe der Yawachse 4 bewirkt eine verbesserte Stabilisierung des aufgenommenen Gerätes M. Dies ist für mobile Geräte M mit großer Masse von beispielsweise mehr als 15 kg besonders relevant. Durch die Lage des Schwerpunktes der Vorrichtung 1 sowie der zweiten Struktur 35 auf oder nahe der Yawachse 4, und zwar in beliebigen Positionen der Vorrichtung 1, werden das Yawlager 41 und die ebenfalls nahe der Yawachse 4 gelegenen Rollager 31 weniger belastet. Außerdem benötigen in der Ausführungsform mit elektronischer Stabilisierung der Yawmotor 43 sowie die Rollmotoren 33 zur elektronischen Stabilisierung des Yawrahmens 40 und des Rollrahmens 30 eine geringere Leistung, wenn der Schwerpunkt der Vorrichtung 1 sowie der zweiten Struktur 35 auf der Yawachse 4 oder nahe der Yawachse 4 liegt. Zur elektronischen Stabilisierung ist damit weniger Energie erforderlich als für die oben erwähnten klassischen Gimbal-Stabilisierungs-Systeme.

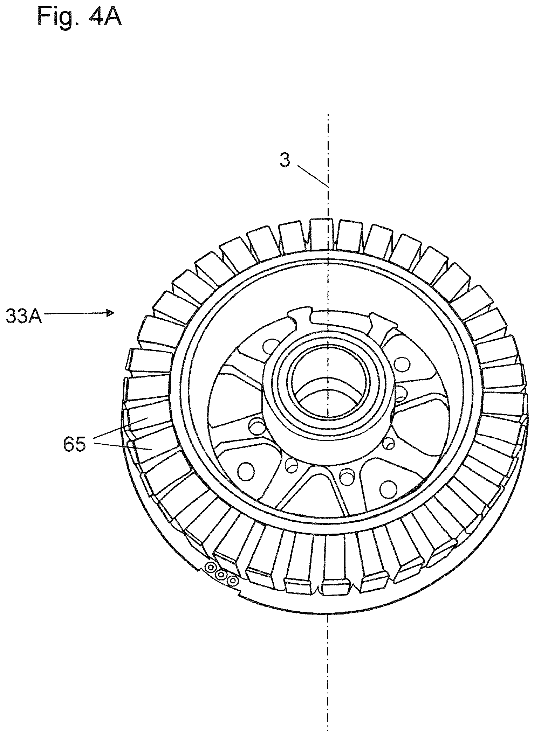

Fig. 4A zeigt einen Stator 33A als Teil eines Rollmotors 33. Der Stator 33A umfasst eine Vielzahl von Spulen 65, beispielsweise 36 Spulen. Der Stator 33A wird derart am Rollrahmen 30 angeordnet, dass eine entlang der Rollachse 3 ausgerichtete Rollwelle 32, welche durch die innere Aussparung in der Mitte des Stators 33A verläuft, die Bewegung des Rollmotors 33 auf den Rollrahmen 30 überträgt.

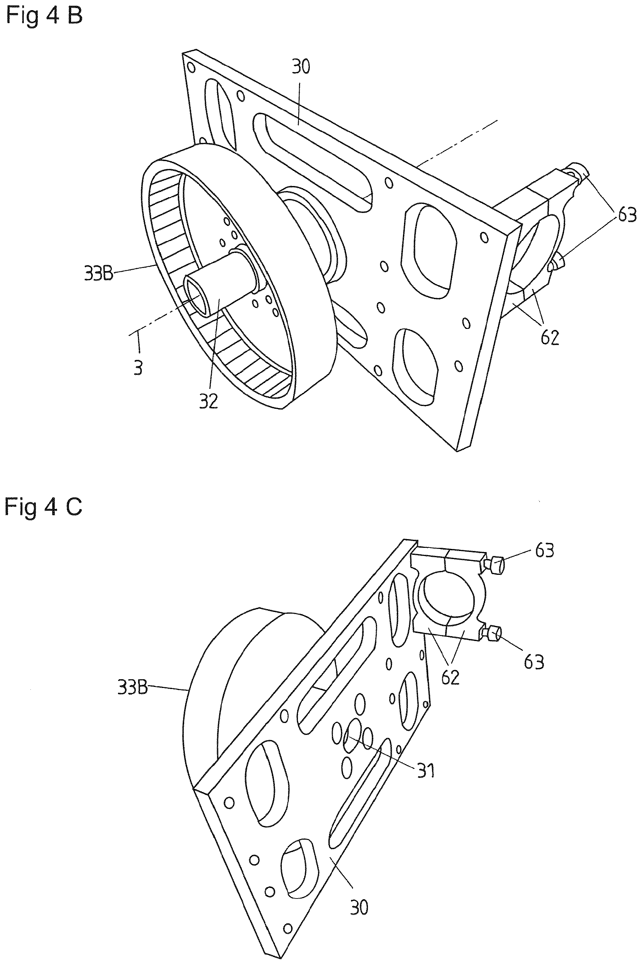

Fig. 4B und 4C beschreiben einen Rotor 33B des Rollmotors 33 der Vorrichtung 1 zur Stabilisierung eines mobilen Gerätes M. Der Rotor 33B ist mit Permanentmagneten versehen, die mit den Spulen 65 des Stators 33A zusammenwirken. Der Rollmotor 33 ist an einer Rollwelle 32 am Stator 33A gelagert und dreht sich um die Spulen 65 im Stator 33A. Dadurch wird ein elektromagnetisches Feld erzeugt. Der Rotor 33B ist an einer Platte des Rollrahmens 30 gelagert. Die Platte ist mittels Rohrschellen 62 und Feststellschrauben 63 mit ersten Rundrohren 61A der des Rollrahmens 30 verbunden.

Die für die Bewegung des Yawrahmens 40 und des Pitchrahmens 20 zum Einsatz kommenden Yaw- und Pitchmotoren 43, 23 sind in der gleichen Weise konstruiert, wie der zuvor beschriebene Rollmotor 33.

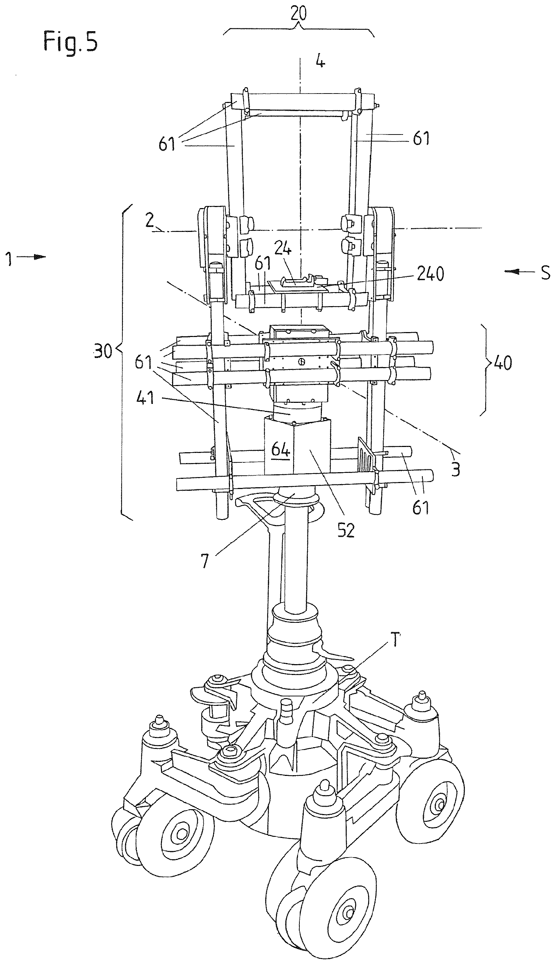

Fig. 5 zeigt eine perspektivische Darstellung eines Ausführungsbeispiels eines Systems S zur Stabilisierung eines mobilen Gerätes M. Das System S umfasst eine der bereits zu Fig. 3, Fig. 3A und Fig. 3B beschriebenen Ausführungsformen einer Stabilisierungsvorrichtung 1. Zusätzlich umfasst das System S ein Transportmittel T. Zu sehen ist der Einsatz an dem Transportmittel T, in diesem Falle einem Kamerawagen oder Dolly, mit welchem die Vorrichtung 1 bewegt werden kann. Die Vorrichtung 1 ist an einer Halterung 7 am Kamerawagen T befestigt.

Ebenso kann die Stabilisierungsvorrichtung 1 gedreht werden, so dass die Halterung 7 oberhalb der Rahmen 20, 30, 40 angeordnet ist, und an einem oberhalb der Vorrichtung 1 angeordneten Transportmittel T, zum Beispiel einem Kran oder einem Wagen eines Schienensystems, fixiert ist, so dass die Stabilisierungsvorrichtung 1 von oben gehalten und bewegt wird. Auch eine derart auf dem Kopf stehende Stabilisierungsvorrichtung 1 kann ein mobiles Gerät M aufnehmen und stabilisieren. Die Stabilisierung erfolgt unter Nutzung derselben Mechanismen und Wirkungsweisen, wie sie zuvor beschrieben wurden.

Im Folgenden wird ein Verfahren zum Justieren eines mobilen Gerätes M in einer Stabilisierungsvorrichtung 1 beschrieben, wie sie beispielsweise in einer der Fig. 3, 3A oder 3B offenbart und weiter oben beschrieben wurde. In einem ersten Schritt wird zunächst die Größe des Pitchrahmens 20 an die Größe des aufzunehmenden mobilen Gerätes M angepasst. Dazu umfasst der Pitchrahmen 20 justierbare Rundrohre 61, die beispielsweise über justierbare Rohrschellen 62 und Feststellschrauben 63 in ihrer Länge und Lage verändert werden können. Darüber hinaus kann die Höhe der Pitchachse 2, um die der Pitchrahmen 20 drehbar ist, innerhalb des Pitchrahmens 20 variiert werden.

Im zweiten Schritt wird das mobile Gerät M auf einer im Pitchrahmen 20 angeordneten Montageplatte 240 befestigt. Die Höhe der Pitchachse 2 wird vorzugsweise derart gewählt, dass der Schwerpunkt einer ersten Struktur 25, umfassend den Pitchrahmen 20 und das mobile Gerät M, in der Pitchachse 2 liegt. Wenn der Pitchrahmen 20 aus einem leichten Material gefertigt ist und das mobile Gerät M eine große Masse aufweist, dann kann das Gewicht des Pitchrahmens 20 vernachlässigt werden. In diesem Fall genügt es die Lage der Pitchachse 2 so einzustellen, dass der Schwerpunkt des im Pitchrahmen 20 aufgenommenen mobilen Gerätes M in der Pitchachse 2 liegt. In einer noch bevorzugteren Umsetzung wird der Schwerpunkt 26 der ersten Struktur 25 beziehungsweise der Schwerpunkt SM des mobilen Gerätes M, analog zu den zuvor gemachten Ausführungen, mit dem Schnittpunkt der Yawachse 4 mit der Pitchachse 2 in Deckung gebracht. Dabei ist die Pitchachse 2 so ausgerichtet, dass sie rechtwinkelig zur Yawachse 4 ist. Für eine Feinjustierung der Lage des Schwerpunktes 26 kann die Lage der Montageplatte 240, auf der das mobile Gerät M befestigt ist, innerhalb des Pitchrahmens 20 variiert werden. So kann die Lage der Montageplatte 240 im Pitchrahmen 20 insbesondere in Richtung der Pitchachse 2, das heißt in Rechts-/Links-Richtung, variiert werden, um den Schwerpunkt 26 in die Yawachse 4 zu verschieben. Die Lage der Montageplatte 240 im Pitchrahmen 20 kann aber auch senkrecht zur Pitchachse 2 in einer Vorwärts-/Rückwärts-Richtung variiert werden, um den Schwerpunkt 26 noch besser in die Pitchachse 2 zu verschieben.

Im dritten Schritt wird der Rollrahmen 30 an die Größe des Pitchrahmens 20 mit dem aufgenommenen mobilen Gerät M angepasst. Dazu umfasst der Rollrahmen 30 justierbare Rundrohre 61, 61A, 61B die beispielsweise über justierbare Rohrschellen 62 und Feststellschrauben 63 in ihrer Lage verändert werden können. So können die Rundrohre 61 nach oben oder nach unten, nach links oder nach rechts verschoben werden. Die Rundrohre 61 können auch entfernt und ersetzt werden, beispielsweise können Rundrohre 61 eines anderen Durchmessers und/oder längere oder kürzere Rundrohre 61 verwendet werden. Zusätzlich sind Gewichtselemente 34 vorgesehen, mit denen der Schwerpunkt des Rollrahmens 30 verändert werden kann. Beispielsweise können die Gewichtselemente 34 Blei- oder Kupferzylinder umfassen, die in die Rundrohre 61 eingeschoben und dort fixiert werden. Der Durchmesser der verwendeten Rundrohre 61 kann an die einzusetzenden Gewichtselemente 34 angepasst werden. Ist der Rollrahmen 30 symmetrisch aufgebaut, dann werden vorzugsweise auch die Gewichtselemente 34 symmetrisch gewählt, um den Schwerpunkt des Rollrahmens 30 in der Yawachse 4 zu halten. Bevorzugt werden die Gewichtselemente 34 derart gewählt, dass der Schwerpunkt 36 einer zweiten Struktur 35, umfassend den Rollrahmen 30, den Pitchrahmen 20 und das mobile Gerät M, in der Rollachse 3 liegt. In einer noch bevorzugteren Umsetzung wird der Schwerpunkt 36 der zweiten Struktur 35 mit dem Schnittpunkt der Yawachse 4 mit der Rollachse 3 in Deckung gebracht. Auch hierbei sollte die Pitchachse 2 so ausgerichtet sein, dass sie rechtwinkelig zur Yawachse 4 ist.

### Bezugszeichenliste:

- 1: Vorrichtung zur Stabilisierung eines mobilen Gerätes

- 2: Pitchachse
- 20: Pitchrahmen
- 21: Pitchlager
- 21A, 21B: Pitchlagereinheiten
- 22: Pitchwelle
- 23: Pitchmotor
- 24: Befestigungselement
- 240: Montageplatte
- 25: erste Struktur
- 26: Schwerpunkt der ersten Struktur
- x: Pitchrichtung (Neigerichtung)

- 3: Rollachse
- 3a, 3b: Achsabschnitte der Rollachse
- 30: Rollrahmen
- 31: Rolllager
- 31A, 31B: Rolllagereinheiten
- 32: Rollwelle
- 33: Rollmotor
- 33A: Stator des Rollmotors
- 33B: Rotor des Rollmotors
- 34: Gewichtselement
- 35: zweite Struktur
- 36: Schwerpunkt der zweiten Struktur
- y: Rollrichtung (Wankrichtung)

- 4: Yawachse
- 40: Yawrahmen
- 41: Yawlager
- 42: Yawwelle
- 43: Yawmotor
- 44: Auflagefläche
- z: Yawrichtung (Gierrichtung)

- 5: Elektronische Steuereinrichtung
- 51: Sensorik
- 52: Controller

- 61: Rundrohr
- 61A: erste Rundrohre
- 61B: zweite Rundrohre
- 62: Rohrschelle
- 63: Feststellschraube
- 64: Gehäuse
- 65: Spule

- 7: Halterung

- A: Ausgangsposition
- A1: Festgelegte Ausgangsposition
- E1: Erste Symmetrieebene
- E2: Zweite Symmetrieebene
- M: Mobiles Gerät
- SM: Schwerpunkt des mobilen Gerätes
- S: System zur Stabilisierung eines mobilen Gerätes
- T: Transportmittel
- V: Vorderseite des mobilen Gerätes

## Patentansprüche

1. Vorrichtung (1) zur Stabilisierung eines mobilen Gerätes (M) umfassend
- einen Pitchrahmen (20) zum Aufnehmen des mobilen Gerätes (M),
- einen Rollrahmen (30) sowie
- einen Yawrahmen (40),
wobei
a) der Pitchrahmen (20) mittels eines Pitchlagers (21) um eine Pitchachse (2) drehbar am Rollrahmen (30) gelagert ist, und
b) der Rollrahmen (30) mittels eines Rolllagers (31) um eine Rollachse (3) drehbar am Yawrahmen (40) gelagert ist, und
c) der Yawrahmen (40) mittels eines Yawlagers (41) um eine Yawachse (4) drehbar an einer Halterung (7) gelagert ist,
so dass ein in den Pitchrahmen (20) aufgenommenes mobiles Gerät (M) um die Pitchachse (2), die Rollachse (3) und die Yawachse (4) drehbar ist
**dadurch gekennzeichnet, dass**
in einer Ausgangsposition (A), in der die Pitchachse (2) rechtwinklig zur Yawachse (4) angeordnet ist,
- das Rolllager (31) zur Lagerung des Rollrahmens (30) entlang der Yawachse (4) zwischen dem Yawlager (41) zur Lagerung des Yawrahmens (40) und
dem Pitchlager (21) zur Lagerung des Pitchrahmens (20) angeordnet ist.

2. Vorrichtung (1) nach Anspruch 1, **dadurch gekennzeichnet, dass** der Yawrahmen (40) entlang der Yawachse (4) ausgerichtet ist und/oder der Schwerpunkt des Yawrahmens (40) auf der Yawachse (4) liegt.

3. Vorrichtung (1) nach Anspruch 1 oder 2, **dadurch gekennzeichnet, dass** der Yawrahmen (40) spiegelsymmetrisch bezüglich zweier Symmetrieebenen aufgebaut ist.

4. Vorrichtung (1) nach einem der vorhergehenden Ansprüche, **dadurch gekennzeichnet, dass** der Yawrahmen (40) im Inneren des Rollrahmens (30) angeordnet ist.

5. Vorrichtung (1) nach einem der vorhergehenden Ansprüche, **dadurch gekennzeichnet, dass** der Rollrahmen (30) zweiseitig am Yawrahmen (40) gelagert ist.

6. Vorrichtung (1) nach einem der vorhergehenden Ansprüche, **dadurch gekennzeichnet, dass** der Rollrahmen (30) spiegelsymmetrisch bezüglich zweier Symmetrieebenen aufgebaut ist.

7. Vorrichtung (1) nach einem der vorhergehenden Ansprüche, **dadurch gekennzeichnet, dass** in einer festgelegten Ausgangsposition (A1) die Vorrichtung (1) spiegelsymmetrisch bezüglich zweier Symmetrieebenen (E1, E2) ist, wobei eine erste Symmetrieebene (E1) von einer durch die Yawachse (4) und die Rollachse (3) verlaufende erste Ebene gebildet wird und die zweite Symmetrieebene (E2) von einer durch die Yawachse (4) und die Pitchachse (2) verlaufende zweite Ebene gebildet wird.

8. Vorrichtung (1) nach einem der vorhergehenden Ansprüche, **dadurch gekennzeichnet, dass** das mobile Gerät (M) in den Pitchrahmen (20) aufgenommen ist, dass der von der Vorrichtung (1) und dem mobilen Gerät (M) gemeinsam gebildete Schwerpunkt in der Ausgangsposition (A) auf der Yawachse (4) liegt und auch bei Drehungen entlang der Pitchachse (2) und/oder der Rollachse (3) und/oder der Yawachse (4) auf der Yawachse (4) bleibt.

9. Vorrichtung (1) nach einem der vorhergehenden Ansprüche, **dadurch gekennzeichnet, dass** die Vorrichtung ein Gewichtselement (34) aus schwerem Material, wie zum Beispiel aus Kupfer oder aus Blei oder aus einer Kombination von beidem, aufweist.

10. Vorrichtung (1) nach Anspruch 9, **dadurch gekennzeichnet, dass** das Gewichtselement (34) am Rollrahmen (30) derart angeordnet ist, dass es ein Gegengewicht zum einem in den Pitchrahmen (20) aufgenommenen mobilen Gerät (M) bildet.

11. Vorrichtung (1) nach Anspruch 9 oder 10, **dadurch gekennzeichnet, dass** das Gewichtselement (34) derart ausgebildet ist, dass es den Schwerpunkt einer zweiten Struktur (35) umfassend den Rollrahmen (30), den Pitchrahmen (20) und das in den Pitchrahmen (20) aufgenommene mobile Gerät (M), in die Rollachse (3) verlagert.

12. Vorrichtung (1) nach einem der vorhergehenden Ansprüche, **dadurch gekennzeichnet, dass** die Vorrichtung (1) eine elektronische Steuereinrichtung (5), umfassend eine Sensorik (51), einen Controller (52) und eine Mehrzahl von Motoren (23, 33, 43) aufweist, zumindest einen Pitchmotor (23) vorgesehen zur Drehung einer mit dem Pitchrahmen (20) verbundenen Pitchwelle (22) um die Pitchachse (2), zumindest einen Rollmotor (33) vorgesehen zur Drehung einer mit dem Rollrahmen (30) verbundenen Rollwelle (32) um die Rollachse (3) sowie einen Yawmotor (43) vorgesehen zur Drehung einer mit dem Yawrahmen (40) verbundenen Yawwelle (42) um die Yawachse (4), wobei die Sensorik (51) Drehungen eines in den Pitchrahmen (20) aufgenommenen mobilen Gerätes (M) detektiert und an den Controller (52) übermittelt und der Controller (52) die Motoren (23, 33, 43) ansteuert, um die von der Sensorik (51) detektierten Bewegungen durch Drehungen der jeweiligen Rahmen (20, 30, 40) auszugleichen, so dass das mobile Gerät (M) stabilisiert wird und in einer festgelegten Ausrichtung gehalten wird.

13. System (S) zur Stabilisierung eines mobilen Gerätes (M) umfassend
- eine Vorrichtung (1) zur Stabilisierung eines mobilen Gerätes (M) nach einem der Ansprüche 1 bis 12 sowie
- ein Transportmittel (T) zum Bewegen der Vorrichtung (1),
**dadurch gekennzeichnet, dass**
die Halterung (7) der Vorrichtung (1) am Transportmittel (T) befestigt ist.

14. System (S) nach Anspruch 13, **dadurch gekennzeichnet, dass** das Transportmittel (T) die Halterung (7) von oben hält, so dass die Vorrichtung (1) herunterhängt und die Halterung (7) einen oberen Bereich der Vorrichtung (1) bildet und der Pitchrahmen (20) zum Aufnehmen des Mobilen Gerätes (M) in der Ausgangsposition unterhalb der Halterung (7) angeordnet ist.

15. Verfahren zum Justieren eines mobilen Gerätes (M) in einer Vorrichtung nach einem der Ansprüche 1 bis 12, umfassend die Schritte
- Anpassen und Justieren des Pitchrahmens (20),
- Justieren des mobilen Gerätes (M) im Pitchrahmen (20),
- Anpassen und Justieren des Rollrahmens (30).
